# EUROPEAN PATENT APPLICATION

(11) **EP 4 279 978 A1**
(43) Date of publication of application: **22.11.2023**
(21) Application number: 23158839.3
(22) Date of filing: 27.02.2023
(51) Int. Cl.: G02B 27/00, B60R 1/29, G06V 10/147, G06V 20/59, G08B 21/06

(54) **A MOTOR VEHICLE CABIN SENSING SYSTEM**

(30) Priority: 05.05.2022 GB 202206528
(71) Applicant: Continental Automotive Technologies GmbH, 30165 Hannover (DE)
(72) Inventor: Cong, Weiquan, 339780 Singapore (SG); Mindescu, Christian, 339780 Singapore (SG); Wustmann, Nathalie, 339780 Singapore (SG); Boo, Keng Aik Alan, 339780 Singapore (SG)
(74) Representative: Continental Corporation

(57) **Abstract**

This disclosure relates to a motor vehicle cabin sensing system. The system comprises an image sensor, an illumination source and an illumination lens array. The image sensor is operable to capture one or more images, the image sensor having a field of view of a motor vehicle cabin. Preferably, the image sensor is operable to capture images in a near infrared wavelength. The illumination source is operable to transmit light rays towards the motor vehicle cabin. The illumination lens array is operable to diffuse the light rays emitting from the illumination source to one or more photoreceptor cells of a retina such that a radiant intensity of a red glow effect detected by the retina is a reduction of 10 to 100 times or 0% to 50% of a radiant intensity of the illumination source.

## Description

### TECHNICAL FIELD

This disclosure relates to a motor vehicle, in particular cabin sensing system for a motor vehicle.

### BACKGROUND

Automotive industry experiences a trend of implementing driver monitoring systems (DMS) to ensure safety of drivers. The most common function of DMS is to monitor status of driver, to determine whether the driver is fatigue, drunk or in a state fit for operating a motor vehicle, to achieve driver's and road users' safety.

Designing an effective DMS is often challenging, as more and more information is required to determine facial characteristics of drivers. One of the methods to counter this problem is to capture images of the driver within an infrared wavelength to obtain images of the driver for facial recognition image processing. A typical working IR wavelength is invisible to human's eyes.

Nonetheless, under certain conditions, for example at low ambient lighting condition, such as an interior environment of a passenger cabin, light rays emitting within IR wavelength can be detected by a human's eye and the light rays will be perceived as a red glow, also known as a red glow effect. This red glow of light may cause distraction to a driver operating the motor vehicle, thus causing discomfort, and compromising safety of the driver.

There is therefore a need to provide a motor vehicle sensing system that overcomes, or at least ameliorates, the problems described above. Furthermore, other desirable features and characteristics will become apparent from the subsequent detailed description and the appended claims, taking in conjunction with the accompanying drawings and this background of the disclosure.

### SUMMARY

A purpose of this disclosure is to ameliorate the problem of red glow effect being detected by human's eye for safety by providing the subject-matter of the independent claims.

The objective of this disclosure is solved by a motor vehicle cabin sensing system, which comprises:
an image sensor operable to capture one or more images, the image sensor having a field of view of a motor vehicle cabin;
an illumination source operable to transmit light rays towards the motor vehicle cabin;
an illumination lens array operable to diffuse the light rays emitting from the illumination source towards the motor vehicle cabin;
**characterized in that:**
the illumination lens array further comprises two or more single lens element, each of the two or more single lens element operable to diffuse the light rays emitting from the illumination source to one or more photoreceptor cells of a retina,
wherein each of the two or more single lens element is operable to detect a radiant intensity representing a red glow; and
wherein the radiant intensity is 0% to 50% of the light rays emitting from the illumination source.

An advantage of the above-described aspect of this disclosure yields a motor vehicle cabin sensing system which solves the problem of red glow effect being perceived by a driver, which causes distraction. The problem of red glow effect is solved by reducing a radiant intensity of the red glow detected by one or more photoreceptor cells of a human's eyes by 10 to 100 times. Preferably, the radiant intensity is reduced to 0% to 50% of the light rays emitting from the illumination source, in response to the diffusing of light rays using an illumination lens array. More preferably, the radiant intensity is reduced to 0.1% to 30% of the light rays emitting from the illumination source, and even more preferably, the radiant intensity is reduced to 1% to 10% of the light rays emitting from the illumination source.

Preferred is the system as described above or as described above as being preferred, in which:
the illumination lens array is positioned forward of the illumination source.

The advantage of the above aspect of this disclosure is to provide an optical means to diffuse light rays emitting from the illumination source such that the light rays transmitting towards the motor vehicle cabin are incident rays received by one or more photoceptor cells of the retina of a human's eye.

Preferred is the system as described above or as described above as being preferred, in which:
the illumination lens array comprises two or more single lens elements integrated on a single lens sheet.

The advantage of the above aspect of this disclosure is to allow flexibility in design of the illumination lens array, such that each single lens element may be resized according to system requirements. Preferably, the total number of lens element depends on the overall lens array size. Nonetheless, there is no constraint as to the number of lens. However, a higher number of lens element will yield an improved or better performance in terms of red glow effect reduction detected by the retina.

Preferred is the system as described above or as described above as being preferred, in which:
the illumination lens array is a micro lens array.

The advantage of the above aspect of this disclosure is to provide an alternative solution by replacing the single sheet illumination lens array with a micro lens array. Advantageously, using micro lens array as the illumination lens array enables distribution of light rays evenly amongst the different lens array, thus achieving significant reduction of a radiant intensity perceived by the one or more photoreceptor cells.

Preferred is the system as described above or as described above as being preferred, in which:
the illumination lens array is a is a Fresnel lens.

The advantage of the above aspect of this disclosure is to provide an alternative solution by replacing the illumination lens array with a Fresnel lens array to achieve reduction in thickness of lens array, thereby yielding a much more compact system.

Preferred is the system as described above or as described above as being preferred, in which:
each of the two or more single lens element further comprises a prism; a diverging lens; or a combination thereof.

The advantage of the above aspect of this disclosure is to provide lens elements on a single sheet of lens array, to diffuse light rays from the illumination source of the motor vehicle cabin sensing system for diffusing light rays emitting from the illumination source such that only 0% to 50% of a radiant intensity is detected and transmitted through the one or more lens element. Preferably, the lens array may use a prism, a diverging lens or a combination of both a prism and a diverging lens to yield desired technical results.

Preferred is the system as described above or as described above as being preferred, in which:
the illumination source comprises a near infrared (NIR) illumination source.

The above aspect of this disclosure is to defines a type of illumination sourced used in the motor vehicle cabin sensing system, to achieve an infrared working wavelength.

Preferred is the system as described above or as described above as being preferred, in which:
the illumination source is a NIR light emitting diode (LED).

The above aspect of this disclosure is to defines an alternative type of illumination sourced used in the motor vehicle cabin sensing system, to achieve an infrared wavelength.

Preferred is the system as described above or as described above as being preferred, in which:
the illumination source is a vertical-cavity surface-emitting laser (VCSEL).

The above aspect of this disclosure is to defines an alternative type of illumination sourced used in the motor vehicle cabin sensing system, to achieve an infrared wavelength.

Preferred is the system as described above or as described above as being preferred, in which:
the system further comprises a reflective panel.

The advantage of the above aspect of this disclosure is to yield light efficiency by reducing light leakage. This technical feature is useful for light sources with a wider view angle and addresses problem of light flux leakage from the sides of the illumination lens array caused by wide view angle. An example of a reflective panel may be a flat plate with reflective surface or a flat reflective mirror.

Preferred is the system as described above or as described above as being preferred, in which:
the reflective panel further comprises a first end and a second end,
wherein
a first end of the reflective panel is displaced adjacent to the illumination light source; and
a second end of the reflective panel is displaced adjacent to the illumination lens array.

The advantage of the above aspect of this disclosure is to yield an arrangement of the reflective panel which addresses problem of light flux leakage from the sides of the illumination lens array caused by wide view angle.

Preferred is the system as described above or as described above as being preferred, in which:
the image sensor is operable within a near infrared (NIR) wavelength.

The above aspect of this disclosure is to define a type of image sensor suitable for implementation in a motor vehicle cabin sensing system as disclosed herein. Preferably, a basic image sensor is expected to work in NIR wavelength for driver monitoring system or cabin monitoring system without departing from the main inventive concept of this disclosure.

Preferred is the system as described above or as described above as being preferred, in which:
the illumination lens array has a dimension of preferably 0.1cm to 10cm (1mm - 100mm), more preferably 5cm to 9cm (50 mm to 90 mm) and even more preferably 0.1 to 0.2cm (1 mm to 2mm).

The advantage of the above aspect of this disclosure is to provide a preferred dimension of the illumination lens array suitable for driver monitoring or cabin sensing systems. More preferably, the maximum size shall not exceed 5cm to 10cm to ensure such motor vehicle cabin sensing systems are able to support eye gaze tracking purposes. However, the main concept of the configuration of a dimension of the illumination lens array is to match the field of illumination of the illumination source at a distance, i.e., from an imaging module of the system to a position of human's eyes. Therefore, depending on distance between driver and illumination source, the minimum size of the illumination lens array may be higher, for example 2mm in diameter which may match the size of light source but can vary higher or smaller in size, without departing from the main inventive concept.

Preferred is the system as described above or as described above as being preferred, in which:
the radiant intensity detected by each of the two or more single lens element is preferably 0% to 50% of the light rays emitting from the illumination source;
more preferably 0.1% to 30% of the light rays emitting from the illumination source; and
even more preferably 1%-10% of the light rays emitting from the illumination source.

The advantage of the above aspect of this disclosure is to yield a motor vehicle cabin sensing system which solves the problem of red glow effect being perceived by a driver, which causes distraction. Preferably, the radiant intensity is reduced to 0% to 50% of the light rays emitting from the illumination source, in response to the diffusing of light rays using an illumination lens array. More preferably, the radiant intensity is reduced to 0.1% to 30% of the light rays emitting from the illumination source, and even more preferably, the radiant intensity is reduced to 1% to 10% of the light rays emitting from the illumination source.

The objective of this disclosure is solved by a method of reducing red glow effect caused by an illumination source emitting light rays from a motor vehicle cabin sensing system, the method comprising:
capturing, by way of an image sensor, a field of view of a motor vehicle cabin;
emitting, by way of an illumination source, light rays towards the motor vehicle cabin; and
diffusing, by way of an illumination lens array, the light rays emitting from the illumination source towards the motor vehicle cabin, wherein the illumination array comprising two or more single lens element,
**characterized by:**
in response to the light rays emitting from the illumination source being diffused by the two or more single lens element,
detecting, by way of each of the one or more single lens element, a radiant intensity representing a red glow, wherein
the radiant intensity is 0% to 50% of the light rays emitting from the illumination source.

An advantage of the above-described aspect of this disclosure yields a method which solves the problem of red glow effect being perceived by a driver caused by illumination from a motor vehicle cabin sensing system. The problem of red glow effect is solved by reducing a radiant intensity of the red glow detected by one or more photoreceptor cells of a human's eyes by 10 to 100 times. Preferably, the radiant intensity is reduced to 0% to 50% of the light rays emitting from the illumination source, in response to the diffusing of light rays using an illumination lens array. More preferably, the radiant intensity is reduced to 0.1% to 30% of the light rays emitting from the illumination source, and even more preferably, the radiant intensity is reduced to 1% to 10% of the light rays emitting from the illumination source.

### BRIEF DESCRIPTION OF DRAWINGS

Other objects and aspects of this disclosure will become apparent from the following description of embodiments with reference to the accompanying drawings in which:
FIG 1. shows a system block diagram in accordance an exemplary embodiment of this disclosure.
FIG 2. shows an optical arrangement in accordance an exemplary embodiment of this disclosure.
FIG 3. shows an optical arrangement in accordance an exemplary embodiment of this disclosure.
FIG 4. shows an optical arrangement in accordance an exemplary embodiment of this disclosure.
FIG 5. shows an optical arrangement in accordance an exemplary embodiment of this disclosure.

In various embodiments described by reference to the above figures, like reference signs refer to like components in several perspective views and/or configurations.

### DETAILED DESCRIPTION OF EMBODIMENT

The following detailed description is merely exemplary in nature and is not intended to limit the disclosure or the application and uses of the disclosure. Furthermore, there is no intention to be bound by any theory presented in the preceding background of the disclosure or the following detailed description. It is the intent of this disclosure to present a motor vehicle cabin sensing system and method which is operable to reduce a radiant intensity of red glow effect received by a retina, by 0% to 50% of a radiant intensity of the illumination source used in the system disclosed.

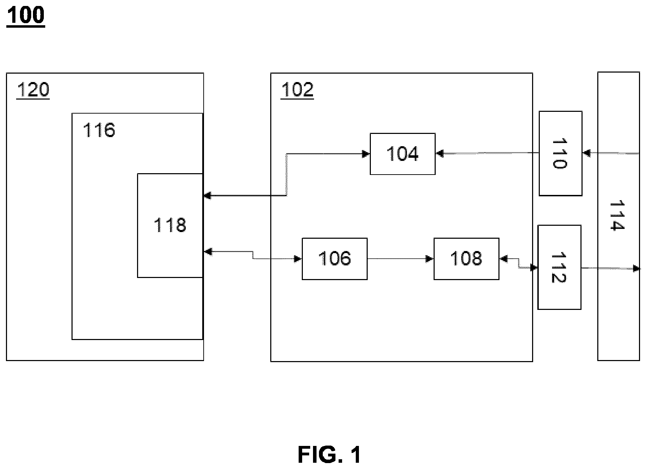

FIG. 1 of the accompanying drawings, shows a system block diagram 100 in accordance an exemplary embodiment of this disclosure. The system 100 includes an image module 102 in electronic communication with a host controller 120. The image module 102 further comprises an image sensor 104, a driver circuit 108 and an illumination source 108. The image sensor 104 is operable to capture images. The image sensor 104 has a field of view (FOV) directed towards a motor vehicle cabin. The illumination source 108 emits light rays towards the motor vehicle cabin, such that images can be captured. The system 100 further includes an illumination lens array 112, operable to diffusing the light rays from the illumination source 108 towards the motor vehicle cabin. Specifically, the illumination lens array 112 is operable to diffuse the light rays emitting from the illumination source 108 to one or more photoreceptor cells of a retina of a user, such that a radiant intensity of a red glow effect detected by the retina is 0% to 50% of a radiant intensity of the illumination source 108. Optionally, the system 100 may include image sensor lens 110 and cover 114 for the entire system 100 such that the system 100 is hidden from view of a user sitting within the motor vehicle cabin. A main advantage of the aforesaid configuration is to achieve a reduction of a radiant intensity of the red glow detected by a retina of a human's eyes 0% to 50% of a radiant intensity of the illumination source 108 used in the motor vehicle cabin sensing system 100 by using the illumination lens array 112.

For clarity and brevity, the host controller 120 include a processing unit 116 with a set of instructions stored thereon to execute functions of the system 100 and may optionally include an analyser module 118 for processing images captured by the image sensor 104. It shall be understood by a skilled practitioner the aforesaid features of the host controller 120 is a complementary feature which enhances the overall system 100 and removal of host controller 120 does not affect the main inventive concept of this disclosure.

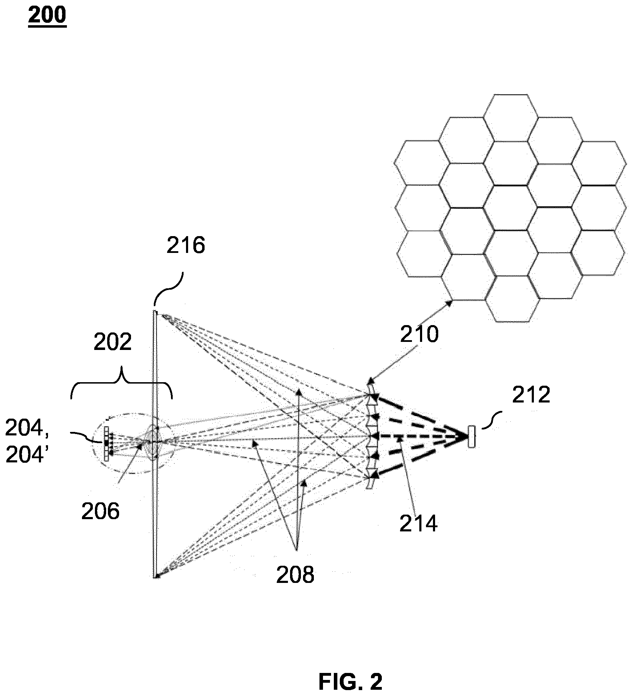

FIG 2. shows an optical arrangement 200 in accordance an exemplary embodiment of this disclosure. As shown in FIG. 2 is a retina 202 having one or more photoceptor cells 204, 204' and an eye lens 206, compositions of which represents a human's eye. Forward of the retina 202 is an object plane 216. An illumination source 212 like illumination source 108 shown in FIG. 1, system 100 is shown here, emitting light rays towards the retina 202. An illumination lens array 210 is arranged forward of the illumination source 212, where the illumination lens array 210 is operable to diffuse the light rays emitting from the illumination source 212 towards the motor vehicle cabin. More preferably, the illumination lens array 210 is a micro lens array operable to diffuse the light rays emitting from the illumination source 212 to one or more photoreceptor cells 204, 204' of a retina 202 such that a radiant intensity of a red glow detected by the retina 202, or each of the one or more photoreceptor cells 204, 204' is 0% to 50% of a radiant intensity of the illumination source 212. The light rays emitting from illumination source 212 are high density incident rays 214. Once the high-density incident rays 214 transmit through the illumination lens array 210, the high-density incident rays 214 is distributed and thus considered diffused lower density light rays 208. Due to this distribution and/or diffusion of light rays emitted from the illumination source 212, the diffused lower density light rays 208 received by one or more photoceptor cells 204, 204' is a radiant intensity of a red glow having 0% to 50% of a radiant intensity of the illumination source 212. In this embodiment shown in FIG. 2, the illumination array 210 comprises multiple lens elements, each of the lens element is formed in a hexagon shape, but not limited thereto. Other suitable shapes, for example circle or square, may also be used as part of the illumination lens array design.

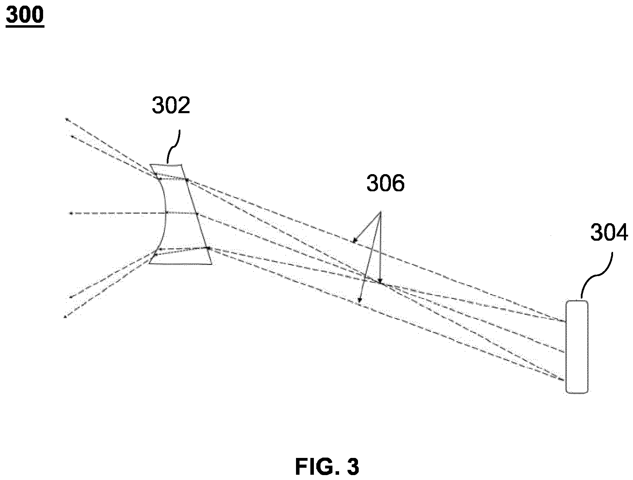

FIG 3. shows an optical arrangement 300 in accordance an exemplary embodiment of this disclosure. An illumination source 304 is shown emitting light rays and in particular incident light rays 306 towards a single element of illumination lens array 302. In this exemplary embodiment, the illumination lens array 302 is a single lens element design, which may comprise a combination of prism and diverging lens. Preferably, the illumination lens array 302 has a dimension compatible with a size of the illumination source 304, or smaller than the illumination source to achieve better reduction of red glow received by the photoreceptor cells. The total number of lens elements depends on the single element size and the overall lens array size. There is no constraint as to a preferred number of lens elements. Nonetheless, a higher number would yield a better performance in terms of reduction of the red glow effect.

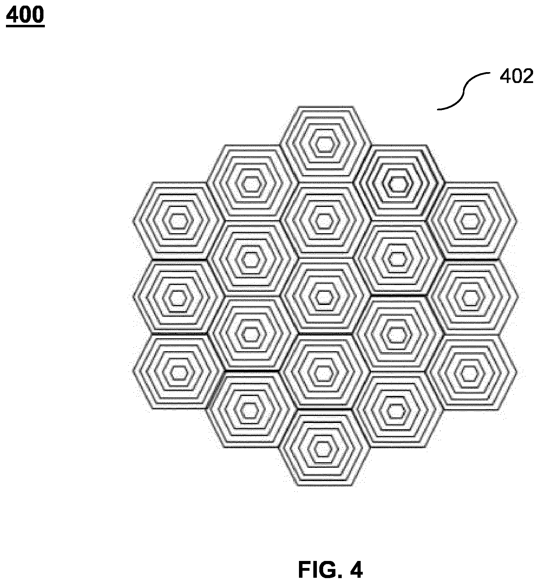

FIG 4. shows an optical arrangement 400 in accordance an exemplary embodiment of this disclosure. More specifically, optical element 400 is an illumination lens array 402 based on Fresnel lens. As illustrated on FIG. 4, each lens is in a hexagon shape, but shall not be limited thereto. The advantage of using an illumination lens array 402 based on Fresnel lens significantly reduces a thickness of the illumination lens array in system 100.

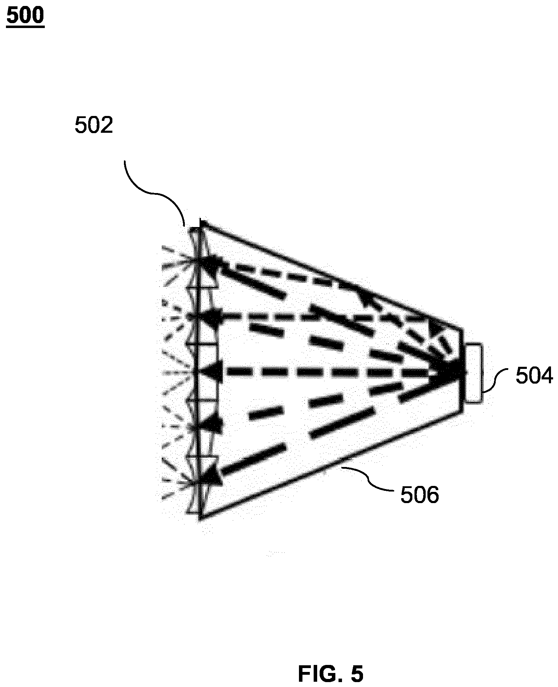

FIG 5. shows an optical arrangement 500 in accordance an exemplary embodiment of this disclosure. An illumination lens array 502 is placed forward of an illumination source 504, with a reflective panel 506 placed therebetween such that a first end of the reflective panel is displaced adjacent to the illumination light source and a second end of the reflective panel is displaced adjacent to the illumination lens array. An advantage of this configuration is to achieve light efficiency by reducing light leakage between the illumination lens array 502 and the illumination source 504. More advantageously, this configuration is helpful to addresses problem of light flux leakage from the sides of the illumination lens array caused by wide view angle. A suitable reflective panel may be a flat plate with reflective surface or a flat reflective mirror.

In the exemplary embodiments discussed herein, the total size of illumination lens array range for cabin sensing systems such as driver's monitoring application or cabin monitoring applications, the size limit shall not to exceed e.g., 5~10cm in diameter. The aforesaid dimension is preferred to support eye gaze tracking functions. Apart from the aforesaid consideration, the dimension of the illumination lens array is based upon matching of the field of illumination of the illumination source at a distance. The minimum size shall be higher than the size of illumination source, e.g., typically ~2mm in diameter, but it is also possible to be of a different size, either bigger or smaller. Accordingly, the illumination lens array has a dimension of preferably 0.1cm to 10cm (1mm - 100mm), more preferably 5cm to 9cm (50 mm to 90 mm) and even more preferably 0.1 to 0.2cm (1 mm to 2mm).

In all the above embodiments, suitable types of illumination sources may include any form of light sources suitable for working in an infrared wavelength range, for example a near infrared (NIR) illumination source, a NIR light emitting diode (LED) or a vertical-cavity surface-emitting laser (VCSEL).

Further, in all of the above embodiments, the radiant intensity detected by each of the two or more single lens element is preferably 0% to 50% of the light rays emitting from the illumination source. More preferably, the radiant intensity may reach as low as substantially zero percent, for example 0.1% to 30% of the light rays emitting from the illumination source and even more preferably 1%-10% of the light rays emitting from the illumination source.

Thus, it can be seen a motor vehicle cabin sensing system and method having an advantage of reducing a radiant intensity of red glow effect received by a retina, by 0% to 50% of a radiant intensity of an illumination source has been provided. While exemplary embodiments have been presented in the foregoing detailed description of the disclosure, it should be appreciated that a vast number of variation exist.

It should further be appreciated that the exemplary embodiments are only examples, and are not intended to limit the scope, applicability, operation or configuration of the disclosure in any way. Rather, the foregoing detailed description will provide those skilled in the art with a convenient road map for implementing an exemplary embodiment of the disclosure, it being understood that various changes may be made in the function and arrangement of elements and method of operation described in the exemplary embodiment without departing from the scope of the disclosure as set forth in the appended claims.

**List of Reference Signs**

| | |
|---|---|
| 100 | System block diagram of a motor vehicle cabin sensing system |
| 102 | Image module |
| 104 | Image sensor |
| 106 | Driver (circuit) |
| 108 | Illumination source |
| 110 | Image sensor lens |
| 112 | Illumination lens array |
| 114 | Cover for monitoring system |
| 116 | Processing Unit |
| 118 | Analyzer module |
| 120 | Host controller |
| 200 | Exemplary embodiment (micro lens array) |
| 202 | Retina |
| 204, 204' | Eye photoreceptor cell |
| 206 | Eye lens |
| 208 | Light rays (diffused lower density) |
| 210 | Illumination lens array |
| 212 | Illumination source |
| 214 | Light rays (high density incident rays) |
| 216 | Object plane |
| 300 | Exemplary embodiment (single lens element) |
| 302 | Illumination lens array |
| 304 | Illumination source |
| 306 | Light rays (incident rays) |
| 400 | Exemplary embodiment (micro lens array) |
| 402 | Fresnel lens |
| 500 | Exemplary embodiment (reflective panel arrangement) |
| 502 | Illumination lens array |
| 504 | Illumination source |
| 506 | Reflective panel |

## Claims

1. A motor vehicle cabin sensing system (100) comprising:
an image sensor (104) operable to capture one or more images, the image sensor (104) having a field of view of a motor vehicle cabin;
an illumination source (108, 212, 304, 504) operable to transmit light rays towards the motor vehicle cabin;
an illumination lens array (112, 210, 302, 502) operable to diffuse the light rays (208, 214, 306) emitting from the illumination source (108, 212, 304, 504) towards the motor vehicle cabin;
**characterized in that:**
the illumination lens array (112, 210, 302, 502) further comprises two or more single lens element, each of the two or more single lens element operable to diffuse the light rays (208, 214, 306) emitting from the illumination source (108, 212, 304, 504) to one or more photoreceptor cells (204, 204') of a retina (202),
wherein each of the two or more single lens element is operable to detect a radiant intensity representing a red glow; and
wherein the radiant intensity is 0% to 50% of the light rays emitting from the illumination source (108, 212, 304, 504).

2. The system of claim 1, wherein the illumination lens array (112, 210, 302, 502) is positioned forward of the illumination source (108, 212, 304, 504).

3. The system of claim 1 or 2, wherein the illumination lens array (112, 210, 302, 502) comprises two or more single lens elements integrated on a single lens sheet.

4. The system of claim 1, 2, or 3, wherein the illumination lens array (112, 210, 302, 502) is a micro lens array.

5. The system of claim 1, 2, or 3, wherein the illumination lens array (112, 210, 302, 502) is a Fresnel lens (402).

6. The system of claim 3, wherein each of the two or more single lens element further comprises a prism; a diverging lens; or a combination thereof.

7. The system of claim 1, wherein the illumination source (108, 212, 304, 504) comprises a near infrared (NIR) illumination source.

8. The system of claim 1 or 7, wherein the illumination source (108, 212, 304, 504) is a NIR light emitting diode (LED).

9. The system of claim 1 or 7, wherein the illumination source (108, 212, 304, 504) is a vertical-cavity surface-emitting laser (VCSEL).

10. The system of claim 1, wherein the system (100) further comprises a reflective panel (506).

11. The system of claims 1 or 10, wherein the reflective panel (506) further comprises a first end and a second end,
wherein
a first end of the reflective panel (506) is displaced adjacent to the illumination light source; and
a second end of the reflective panel (506) is displaced adjacent to the illumination lens array (112, 210, 302, 502).

12. The system of claim 1, wherein the image sensor (104) is operable within a near infrared (NIR) wavelength.

13. The system according to any one of the preceding claim, wherein the illumination lens array (112, 210, 302, 502) has a dimension of preferably 0.1 cm to 10cm (1mm - 100mm), more preferably 5cm to 9cm (50 mm to 90 mm) and even more preferably 0.1 to 0.2cm (1 mm to 2mm).

14. The system according to any one of the preceding claims, wherein the radiant intensity detected by each of the two or more single lens element is preferably 0% to 50% of the light rays emitting from the illumination source; more preferably 0.1% to 30% of the light rays emitting from the illumination source; and even more preferably 1%-10% of the light rays emitting from the illumination source.

15. A method of reducing red glow effect caused by an illumination source (108, 212, 304, 504) emitting light rays towards a motor vehicle cabin sensing system, the method comprising:
capturing, by way of an image sensor (104), a field of view of a motor vehicle cabin;
emitting, by way of an illumination source (108, 212, 304, 504), light rays towards the motor vehicle cabin; and
diffusing, by way of an illumination lens array (112, 210, 302, 502), the light rays emitting from the illumination source towards the motor vehicle cabin, wherein the illumination array (112, 210, 302, 502) comprising two or more single lens element,
**characterized by:**
in response to the light rays emitting from the illumination source (108, 212, 304, 504) being diffused by the two or more single lens element,
detecting, by way of each of the one or more single lens element, a radiant intensity representing a red glow, wherein
the radiant intensity is 0% to 50% of the light rays emitting from the illumination source (108, 212, 304, 504).
